# EUROPEAN PATENT SPECIFICATION

(11) **EP 2 691 634 B1**
(45) Date of publication and mention of the grant of the patent: **14.01.2015**
(21) Application number: 12712637.3
(22) Date of filing: 29.03.2012
(51) Int. Cl.: F03B 3/12, F03B 13/26, F03B 17/06, B29C 70/00

(54) **SPAR FOR A WATER-DRIVEN TURBINE BLADE AND MANUFACTURE THEREOF**
HOLM FÜR EINE WASSERANGETRIEBENE TURBINENSCHAUFEL UND HERSTELLUNG DAVON
LONGERON POUR PALE DE TURBINE ENTRAÎNÉE PAR L'EAU ET SON PROCÉDÉ DE FABRICATION

(30) Priority: 30.03.2011 GB 201105341
(43) Date of publication of application: 05.02.2014
(73) Proprietor: Gurit (UK) Ltd., Newport Isle of Wight PO30 5WU (GB)
(72) Inventor: MCEWEN, Luke, Lymington Hampshire SO41 3SB (GB)
(74) Representative: Jenkins, Peter David
(86) International application number: PCT/EP2012/055685
(87) International publication number: WO 2012/130977

(56) References cited:
- EP-A1- 2 363 342
- WO-A1-2010/065928
- WO-A2-2010/083840
- WO-A2-2011/015666
- GB-A- 2 216 606

## Description

The present invention relates to a spar for a turbine blade and to a method of manufacturing a spar for a turbine blade, and in particular to a turbine blade for use as a turbine blade in a tidal generator. The present invention also relates to a turbine blade incorporating such a spar, and to a method of manufacturing such a turbine blade.

Many current axial-flow tidal turbine designs resemble horizontal axis wind turbines (HAWTs) in their general configuration. Typically, two, three or four blades radiate outwardly from a central hub. Other designs use helical blades in a cross-flow configuration. In almost all cases there is a tendency for blades to be designed with relatively slender shapes for optimum hydrodynamic properties, typically to achieve high lift/drag ratios.

Compared to wind turbine blades, tidal turbine blades generate the same power with a smaller area, due to the higher density of the fluid (water for tidal turbines, versus air for wind turbines). For a similar thickness/chord ratio of the blade section, this means that bending moments and shear forces must be carried by a smaller cross-section. To avoid excessive stresses in the material, more of the blade cross-section must be filled with material. If the blade is made of metal, e.g. steel, it can become prohibitively heavy. If the blade is made of composite material, such a fibre reinforced resin composite material, this is not a problem from a weight perspective, because the blade is supported to a large extent by its buoyancy in the water. However, there is a challenge in fitting sufficient material into a small cross-section using a typical hollow spar designs as used on wind turbines. As well as high bending moments, tidal turbine blades see relatively high shear forces because those bending moments are developed over a shorter length than in a wind turbine blade.

If the loads are high enough, it may be necessary to make the spar solid for at least a part of its length. This raises challenges in manufacture, as both surfaces of the blade (suction side and pressure side) must be of fair shape; typically this is achieved by moulding the blade shell and/or spar in two halves. Joining the two halves of a solid spar results in high shear stresses at the joint, which may exceed the capacity of typical high-strength adhesives or biaxial secondary bonding laminate, particularly towards the tip where the blade is thinnest. Furthermore, because the spar is tapered in thickness along its length and of non-rectangular cross-section, the process of layering composite materials into moulds is time-consuming and difficult to automate for efficient production.

Finally at the inboard (root) end of the blade, it must be joined to the rest of the rotor. Achieving a strong and reliable connection which can withstand many years' fatigue loads and extreme loads under water is a challenge. If conventional known wind-turbine blade connections are used, such as T-bolts or bonded inserts to a pitch bearing or similar hub connection, the root end of the blade needs to be disproportionately large compared to the aerofoil part of the blade: for instance a 1 MW wind turbine may have blades of approximately 30m length whereas a tidal turbine of similar power output will need blades of approximately only 10m length. All the other dimensions will scale roughly in the same proportion except the root diameter. Because the bending moments at the root of the tidal turbine blade are similar to those of the wind turbine blade, with similar joint design it will be necessary for both types of blade to have a root diameter of the order of 1.5m. The aerofoil section of the 1MW wind turbine blade might be almost 1m in thickness whereas the 1MW tidal turbine blade may be only about 0.3m thick at the start of the aerofoil section of the blade. Thus the tidal turbine requires a disproportionately steep transition from the (smaller) aerofoil section to the root section, to avoid a large part of the blade length being taken up by this transition region, which is thicker than the optimum aerofoil hence would cause excessive drag if it extended too far outboard. The problem with such a steep transition using hollow spar designs such as used on wind turbine blades is that the curvature of the faces of the spar generates Brazier loads that tend to deform the spar under load.

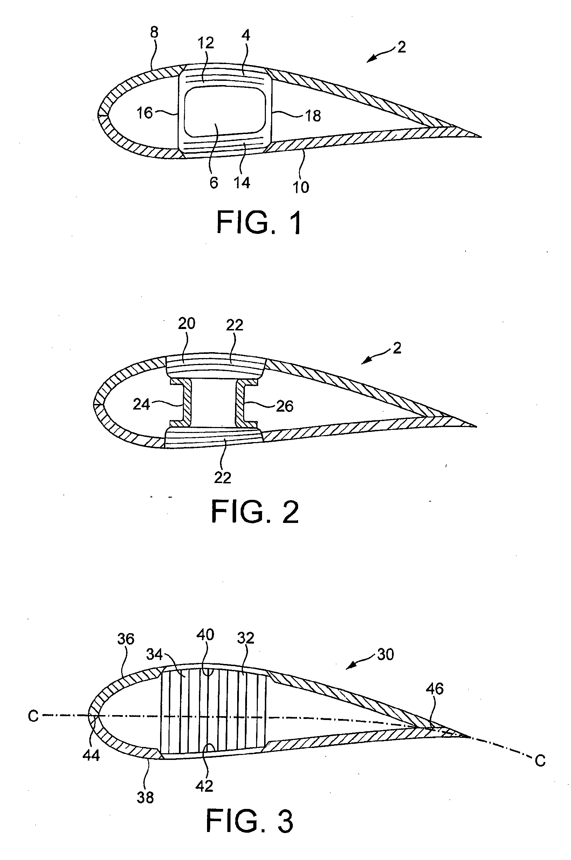

In a conventional wind turbine blade, as shown in Figure 1 which is a cross-section through a blade 2, there is typically a central spar 4 formed as a hollow box section, which is made by laminating composite material onto a male mandrel, which after removal provides a central longitudinal cavity 6. The blade surfaces 8, 10 are affixed to opposed sides of the spar 4. The spar 4 includes two opposed outer spar cap portions 12, 14 integrally connected by two opposed transversely oriented inner shear web portions 16, 18 Alternatively, as shown in Figure 2, the spar 20 is made from two opposed mutually spaced bodies known in the art as spar caps 22. The spar caps 22 are joined together to form a unitary spar 20 by opposed shear webs 24, 26. The spar caps 22 are composed primarily of unidirectional fibres running longitudinally along the blade axis; their purpose is to carry bending moments. The shear webs 24, 26 are composed primarily of fibres laid at +/-45 degrees to the axial direction; their purpose is to carry shear forces.

In both of these known structures there is a limit to how thick the spar portions or spar caps can become because, for a given blade thickness, as the spar caps are progressively thickened the shear webs become progressively less deep in the transverse direction and hence become unable to carry the shear forces. In the box spar method of Figure 1 it becomes impractical to make the spar if the spar caps are too thick because the mandrel becomes very thin. If the box spar is instead made in upper and lower parts in a female mould the joint between them becomes too weak to carry shear forces adequately. Furthermore in Figure 2 the adhesive joint between the spar caps and the shear webs becomes too weak to carry very high shear forces to which tidal turbine blades are subjected during use.

Another spar for a water-driven turbine blade is known from WO 2011/015666.

Attempts have been made by various companies to manufacture blades for 1MW tidal turbines. Currently, to the knowledge of the Applicant, none of these have been successful. So there is a need for an economically viable method of making blades for tidal turbines that are strong enough to work at the megawatt scale.

The present invention aims at least partially to meet that need.

Accordingly, the present invention provides spar for a water-driven turbine blade according to claim 1, the spar comprising a substantially planar stack of first sheets secured together, each first sheet comprising fibre reinforced resin composite material, wherein opposed edges of the first sheets define opposed edges of the stack, the edges of the stack defining a mounting portion for mounting the spar to a turbine member and at least one elongate blade supporting portion, the first sheets extending in a longitudinal direction of the elongate blade supporting portion.

The present invention further provides a water-driven turbine blade including a spar according to the present invention, the turbine blade including opposite first and second surfaces each defining a respective load bearing blade surface, and the spar being located between the first and second surfaces, the first sheets of the stack lying in a plane extending between the first and second surfaces.

The present invention further provides a method of manufacturing a spar for a water-driven turbine blade according to the steps defined in claim 13, the method comprising the steps of:
a) laying up a plurality of plies of fibre reinforced resin composite material to form a substantially planar laminate thereof;
b) curing the resin to form a cured sheet from the laminate;
c) cutting the sheet to form opposed edges which define a part of a mounting portion for mounting the spar to a turbine member and a part of at least one elongate blade supporting portion; and
d) assembling together a substantially planar stack of the cut sheets to form a spar, the opposed edges of the sheets being arranged to form opposed edges of the stack, the edges of the stack defining the mounting portion for mounting the spar to a turbine member and the at least one elongate blade supporting portion, the sheets extending in a longitudinal direction of the elongate blade supporting portion.

Preferred features are defined in the dependent claims.

Preferred embodiments of the present invention provide a tidal turbine blade whose spar is made up of cured plies arranged in a plane approximately perpendicular to the aerofoil chord line or blade surface, i.e. in a plane parallel to the primary lift force on the blade.

In this specification, the turbine blades incorporating the spars of the present invention may be used in any type of turbine which generates electrical power from flow of water relative to the turbine blade, which causes motion of the turbine blade which in turn drives an electrical generator, either directly or via a hydraulic pump. Depending upon the turbine design, the turbine is most typically disposed in the sea, but may be disposed in a river, or even a lake or other body of moving water. Most typically, the turbine is a tidal turbine which is adapted to cause electrical power generation from tidal motion, either on a rising sea tide or a reverse falling sea tide, with the turbine moving by water flow relative thereto in either of two opposite directions.

The turbine is typically an axial flow turbine, in which plural radial turbine blades are fixed to a rotatable hub which is caused to rotate about an axis by water movement over the turbine blade surfaces. Alternatively, the turbine is a cross flow turbine, in which the turbine blades are fixed to a support and are caused to rotate, for example in an oscillating motion, about a longitudinal axis of the turbine blade by water movement over the turbine blade surfaces, the turbine blade therefore acting similar to an aerofoil. However, the turbine into which the spars of the spars of the present invention may be incorporated may have any configuration adapted for use with moving water providing the driving force for motion of the turbine in order to generate electrical power.

In particular, the preferred embodiments of the present invention relate to a tidal turbine blade spar, and its method of manufacture, in which the cured plies of composite material in the spar are arranged substantially perpendicular to the aerofoil chord line, instead of being substantially parallel to it, as used in the prior art. That is to say the plies are arranged in the plane of the main lift force on the blade, so that off-axis fibres in those plies can carry the primary shear forces better. The orientation of the plies circumvents the problems of achieving sufficient shear strength and of laborious laminating of a spar, and also carries efficiently the Brazier loads in the root transition part of the blade. The present invention has particular application to blades in which the spar must be solid or substantially solid to achieve sufficient strength. However, the present invention also has application to blades incorporating more lightly-loaded spars if the benefits in manufacturing efficiency outweigh any increase in material usage.

Embodiments of the present invention will now be described by way of example only with reference to the accompanying drawings, in which:
Figure 1 is a schematic transverse cross-section through a first known wind turbine blade;
Figure 2 is a schematic transverse cross-section through a second known wind turbine blade;
Figure 3 is a schematic transverse cross-section through a tidal turbine blade in accordance with a first embodiment of the present invention;
Figure 4 is a schematic perspective view of a spar for a tidal turbine blade in accordance with a second embodiment of the present invention;
Figure 5 is a schematic plan view of a spar for a tidal turbine blade in accordance with a third embodiment of the present invention;
Figure 6 is a schematic perspective view of a first attachment mechanism at a root end of a spar for a tidal turbine blade in accordance with a fourth embodiment of the present invention;
Figure 7 is a schematic perspective view of a tidal turbine blade in accordance with a fifth embodiment of the present invention, the spar incorporating a second attachment mechanism at a root end of the spar;
Figure 8 is a schematic cross-section through a tidal turbine blade in accordance with a sixth embodiment of the present invention, the spar incorporating a third attachment mechanism at a root end of the spar;
Figure 9 is a schematic cross-section through a tidal turbine blade in accordance with a seventh embodiment of the present invention, the spar incorporating a fourth attachment mechanism at a root end of the spar; /
Figure 10 is a schematic cross-section through a tidal turbine blade in accordance with an eighth embodiment of the present invention, the spar incorporating a fifth attachment mechanism at a root end of the spar;
Figure 11 is a schematic perspective view of a sixth attachment mechanism at a root end of a spar for a tidal turbine blade in accordance with a ninth embodiment of the present invention;
Figure 12 is a schematic perspective view of a seventh attachment mechanism at a root end of a spar for a tidal turbine blade in accordance with a tenth embodiment of the present invention;
Figure 13 is a schematic cross-section through a tidal turbine blade mounted to a hub in accordance with an eleventh embodiment of the present invention, the spar incorporating an eighth attachment mechanism at a root end of the spar;
Figure 14 is a schematic perspective view of the root end of the spar of Figure 13;
Figure 15 is a schematic cross-section of a ninth attachment mechanism at a root end of a spar for a tidal turbine blade in accordance with a twelfth embodiment of the present invention;
Figure 16 is a schematic perspective view of a spar for a tidal turbine blade in accordance with a thirteenth embodiment of the present invention;
Figures 17(a) and (b) are each a schematic cross-section through a spar for a tidal turbine blade in accordance with, respectively, fourteenth and fifteenth embodiments of the present invention;
Figure 18 is a schematic cross-section through a spar for a tidal turbine blade in accordance with a sixteenth embodiment of the present invention;
Figure 19 is a schematic plan view showing how a spar for a tidal turbine blade may be formed from a layer of plies of composite material in accordance with a seventeenth embodiment of the present invention;
Figure 20 is a schematic plan view showing how a spar for a tidal turbine blade may be formed from a layer of plies of composite material in accordance with an eighteenth embodiment of the present invention;
Figure 21 is a schematic plan view showing how a spar for a tidal turbine blade may be formed from a layer of plies of composite material in accordance with a nineteenth embodiment of the present invention;
Figure 22 is a schematic perspective view of a spar for a tidal turbine blade in accordance with a twentieth embodiment of the present invention;
Figures 23 and 24 are respectively a schematic side cross section and a schematic plan cross section of a mounting structure for the spar of Figure 22;
Figure 25 is a schematic plan view of a tidal turbine blade in accordance with a twenty first embodiment of the present invention;
Figure 26 is a schematic perspective view of the tidal turbine blade of Figure 25 mounted on an axle;
Figure 27 is a schematic perspective view of a spar for a tidal turbine blade in accordance with a twenty second embodiment of the present invention; and
Figure 28 a schematic side view of the spar of Figure 27 during manufacture when laid up on a mould surface.

Referring to Figure 3, there is shown a schematic transverse cross-section through a tidal turbine blade in accordance with a first embodiment of the present invention. The tidal turbine blade 30 includes a central spar 32 formed as a solid body of parallel laminated sheets 34 of fibre-reinforced resin composite material. Each sheet comprises a plurality of stacked plies (not shown) of the fibre-reinforced resin composite material produced, as described hereinafter, from prepreg or infused plies. The opposed blade surfaces 36, 38 are affixed to opposed sides 40, 42 of the spar 32 and are joined together at a leading edge 44 and at a trailing edge 46 of the blade 30.

The sheets 34 extend in the longitudinal direction of the blade 30, along the blade axis, substantially from the root to the tip. The sheets 34 therefore extend substantially transverse to the chord direction C-C. Accordingly, the sheets 34 each substantially lie in a plane of maximum load for the tidal turbine blade 32.

A proportion, typically around 60-90%, of the plies in each sheet 34 comprise longitudinally oriented unidirectional fibres, extending substantially along the blade axis, which resist any bending moments acting transversely to the blade length. A proportion, typically the remainder, of the plies in each sheet 34 comprise a biaxial fabric having fibres aligned at +/-45 degrees to the blade axis. These biaxial sheets carry shear forces. The biaxial plies carrying the shear forces are interleaved with the unidirectional plies carrying bending moment. The sheets 34 are individually fabricated from plural plies and then cured. Then the cured sheets 34 are bonded together to form the cross-section of the spar 32. The resins present in the plural plies laid-up within each sheet 34 are all co-cured together to form a single integral fibre-reinforced resin matrix within the respective sheet 34. Accordingly, there is sufficient inter-ply bond strength within each sheet 34 to transfer the shear loads from the unidirectional fibres to the biaxial fibres.

In a modified embodiment, rather than comprising both unidirectional plies and biaxial plies which are interleaved together, the plies in each sheet 34 comprise a triaxial fabric having fibres aligned at 0, +45 and - 45 degrees to the blade axis.

In another modified embodiment, the plies in each sheet 34 comprise unidirectional plies having fibres aligned at 0, +45 and - 45 degrees to the blade axis.

Further embodiments may use multiaxial fabrics or unidirectional plies with fibres in other combinations of directions that give the spar sufficient shear and axial strength, such as fibres oriented at +10 and -10 degrees to the blade axis.

In the illustrated embodiment the spar 32 consists only of the sheets 34. However, in other embodiments the spar 32 may include additional layers sandwiched between one or more pairs of adjacent fibre reinforced resin sheets 34, for example a layer of resin or polymeric material, or a film of thermoplastic material, which does not include fibres. Such additional layers may be incorporated into any of the embodiments of the invention.

In the illustrated embodiment of the water-driven turbine blade, the opposed edges of the stack are attached to opposed inner faces of the first and second surfaces. However, in alternative embodiments, the opposed edges of the stack each form a respective part of the first and second surfaces, and may be shaped accordingly.

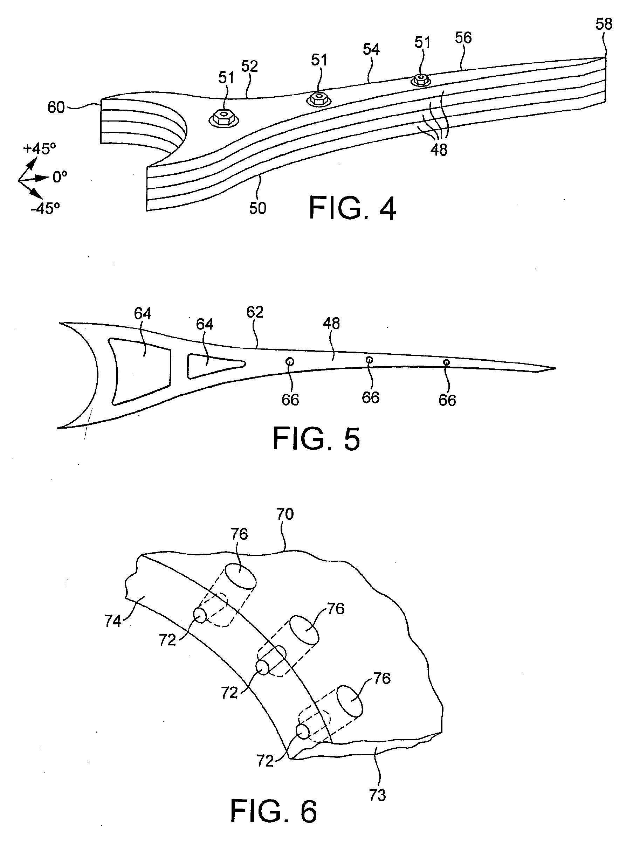

Figure 4 is a schematic perspective view of a spar for a tidal turbine blade in accordance with a second embodiment of the present invention and shows how the spar may be assembled. A sheet 48 of plural plies of fibre-reinforced resin composite material is laid up with the selected plies having the desired fibre angles, typically at 0, +45 and -45 degrees to the blade axis as described above. The resin in the sheet 48 is subsequently cured.

The sheet 48 is then cut to form a desired external profile shape 52 corresponding to that of the final spar. In Figure 4, longitudinally extending edges 54, 56 define portions of forward and rear edges of the resultant spar, and the edges coincide at a tip end 58 corresponding to a tip of the spar. The opposite root end 60 corresponds to a root end of the spar.

Plural sheets 48 are then stacked together and adhesively bonded on the adjacent major faces, so as to form a stack 50 having a spar cross-section shown in Figures 3 and 4. The stack 50 may be held together by bolts 51.

Figure 5 is a schematic plan view of a spar for a tidal turbine blade in accordance with a third embodiment of the present invention This shows that the cut pattern for the external profile shape 62 may also incorporate alignment through-holes 64 for aligning the profiles of the stacked sheets 48 and bolt through-holes 66 for clamping the sheets 48 together during the adhesive bonding process using bolts, as shown for example by bolts 51 in Figure 3. The provision of such alignment through-holes 64 also saves weight in the resultant spar.

Various spar attachment mechanisms may be employed to mount the tidal turbine blade of the various embodiments of the present invention to a rotatable hub.

Referring to Figure 6, the attachment of the blade 70 may use the T-bolt method, which is well known in the wind turbine blade industry. A plurality of threaded bolts extend from the hub, each bolt being received in an axially oriented bolt hole 72 at an annular root end 74 of the spar 73. The threaded free end of the bolt is threaded into a radially extending cylindrical nut member 76 received in a corresponding radial hole in the root end 74.

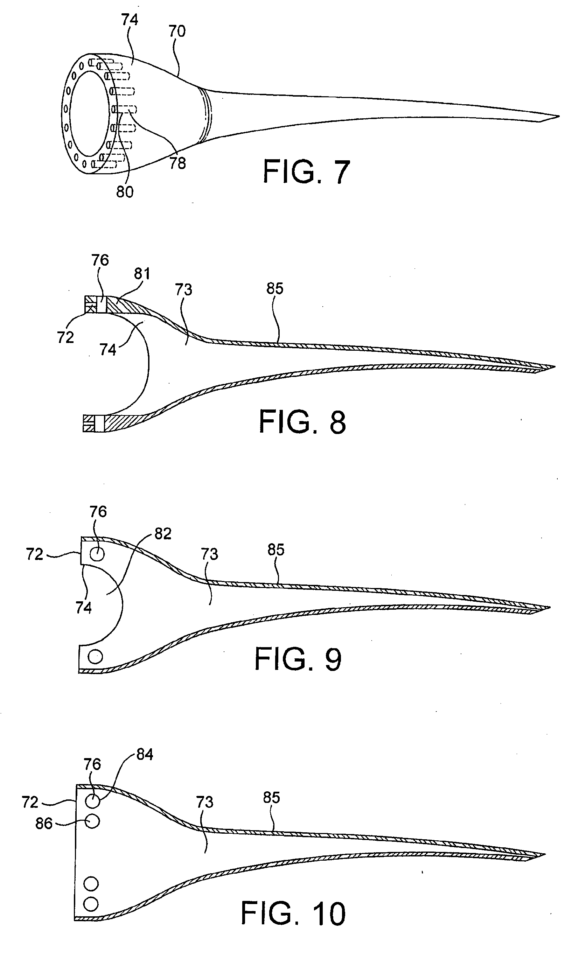

Referring to Figure 7, the attachment of the blade 70 may use the bonded studs method, which is also well known in the wind turbine blade industry. A plurality of threaded studs extend from the hub, each stud being received in an axially oriented internally threaded insert 78 which is adhesively bonded into an axial hole 80 in the annular root end 74 of the blade 70. The threaded free end of the stud is threaded into the insert 78. The insert 78 is typically of metal.

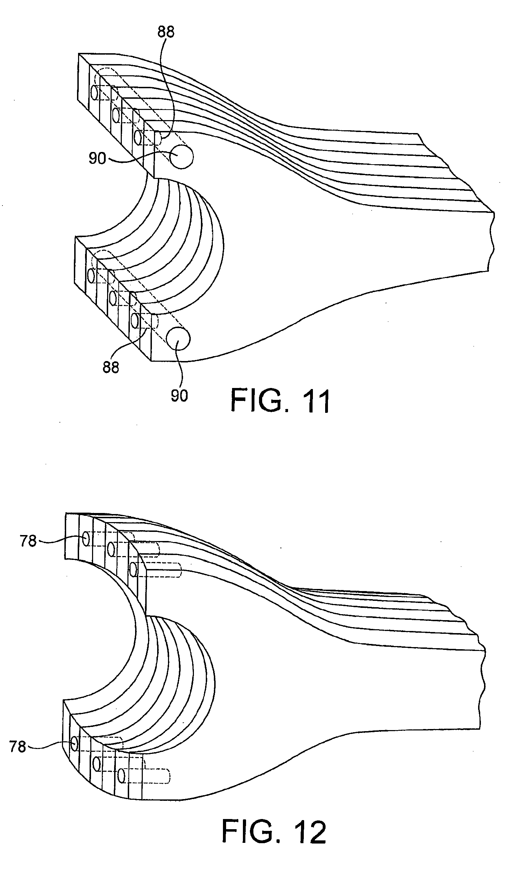

Either of these methods illustrated in Figures 6 and 7 may be implemented using a known cylindrical root moulding 81, which is adhesively bonded to the root end 74 of the spar 73, as illustrated in Figure 8. Alternatively, the attachment may be directly connected to the spar 73. In Figure 9 the nut member 76 for the T-bolt method is directly received in a corresponding transverse hole in the root end 74. A central cavity 82 is located at the root end 74, to reduce material and weight. In Figure 10, such a central cavity is not provided and the root end 74 of the spar 73 includes radially inner and radially outer T-bolt mounting arrays 84, 86. Each of Figures 8 to 10 illustrates a blade shell 85 surrounding the spar 73. In the case of T-bolts, plural T-bolt mounting arrays 88 may share a common barrel nut 90, as shown in Figure 11. In the embodiment of Figure 12, the array of the threaded insert 78 may be curved to form an arc.

In any of these T-bolt embodiments, the transverse hole for receiving the barrel nut(s) can be cut during the sheet profile cutting operation, assisting with alignment and avoiding a further process step.

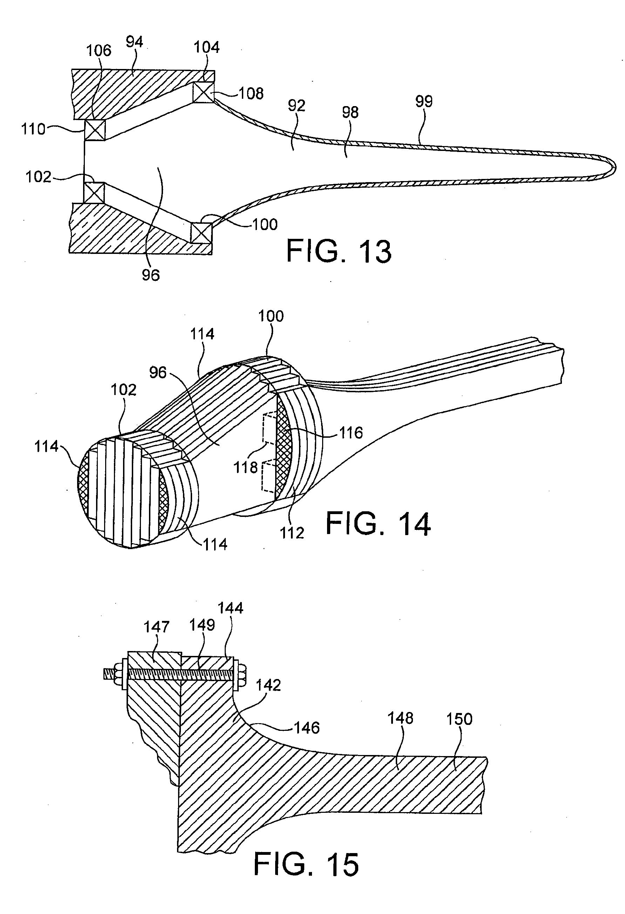

Figures 13 and 14 illustrate a tidal turbine blade 92 rotatably mounted to a hub 94 in accordance with a further embodiment of the present invention. A spar 98 is surrounded by a blade shell 99. The root end 96 of the spar 98 includes a relatively large diameter bearing outer mount surface 100 and a relatively small diameter bearing inner mount surface 102. The surfaces 100, 102 are mutually spaced in a longitudinal direction along the spar 98. A correspondingly shaped portion of the hub 94 includes a relatively large diameter bearing mount surface 104 and a relatively small diameter bearing mount surface 106. Annular bearings 108, 110 rotatably mount the tidal turbine blade 92 to the hub 94. One large diameter bearing 108 is fitted between mount surfaces 100, 104 and one smaller diameter bearing 110 is fitted between mount surfaces 102, 106. In a modified embodiment, the spaced bearings may have the same diameter.

Additional chordal-shaped packing pieces 112, 114 may be incorporated on opposite sides of the spar 98 to define fully annular bearing mount surfaces 100, 102, and to spread the bearing load evenly around the bearing mount surfaces 100, 102, as shown in Figure 14. The pieces 112, 114 may be manufactured independently by a stack-forming process similar to that for the spar as described above, or by using off-cuts of the stack produced during the spar manufacture. Such packing pieces 112, 114 may be located in correct position on the opposite sides of the spar 98 using lugs 116 inserted into complementary slots 118 (both shown in phantom) cut in the main spar 98 to improve the strength of the connection to the spar 98.

Such a bearing mount structure can avoid the problems associated with large diameter slewing ring bearings used, for example, on wind turbine blades, and the sealing of such bearings under water. Such an arrangement generates very high shear forces in the spar 98 between the two bearings 108,110, and high crush loads on the spar 98 as it passes through the bearings 108,110. However, the spar structure of the invention allows the spar 98 to be constructed that is much better at carrying high shear forces and crushing loads than a conventional hollow spar, so is well suited to such an arrangement. In particular, the spar construction provides a spar that is capable of carrying the high shear and crushing loads inherent in this longitudinally spaced bearing design without having to put the bearings impracticably far apart to reduce these loads sufficiently to be carried by a conventional hollow spar. The reduced bearing spacing then offers benefits in reduced hub size, weight and/or cost, and also improved hydrodynamics.

In a turbine construction in which two turbine blades are mounted diametrically opposite to each other, a through-spar design may be used to connect two opposite blades. Such a through-spar design may be used for a blade which has controllably variable pitch, such as an oscillating foil-type blade, in which the blades pitch in the same direction.

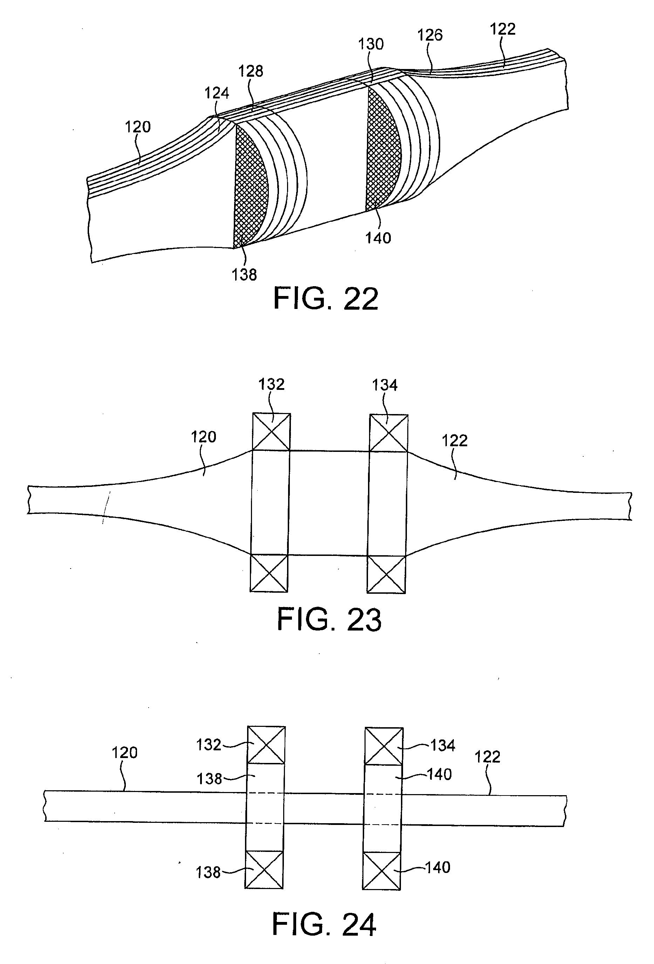

As shown in Figures 22 to 24, in one embodiment a single integral construction of composite material comprises two opposed spar elements 120, 122 each having formed, on a radially inner end 124, 126, an annular bearing mount surface 128, 130. Each bearing mount surface 128, 130 has a structure as described above with respect to Figure 14. This provides two longitudinally spaced bearing mount surfaces 128, 130, which can be mounted to a hub by respective annular bearings, forming an oscillating foil-type blade which rotates about the longitudinal axis of the blade. As shown in Figures 23 and 24, the annular bearings 132, 134 are directly mounted to the bearing mount surfaces 128, 130, and engage the spacer elements 138, 140 on opposite sides of the spar elements 120, 122.

The spar structure includes composite material sheets orthogonal to the plane of the blade, and accordingly the spar mount at the root end is able to carry bending and shear loads effectively in the plane of the laminate. Therefore the spar mount at the root end 142 may alternatively have the structure shown in Figure 15, in which the root end 142 includes opposed integral mounting flanges 144 extending outwardly in the plane of the laminate. The laminate structure permits such mounting flanges 144, which have a corner 146 between the mounting flanges 144 and the major portion 148 of the spar 150. The flanges 144 can be mounted to the hub 147 by bolts 149. This provides a spar mounting connection that is simpler, lighter and more compact than the T-bolt structure described above.

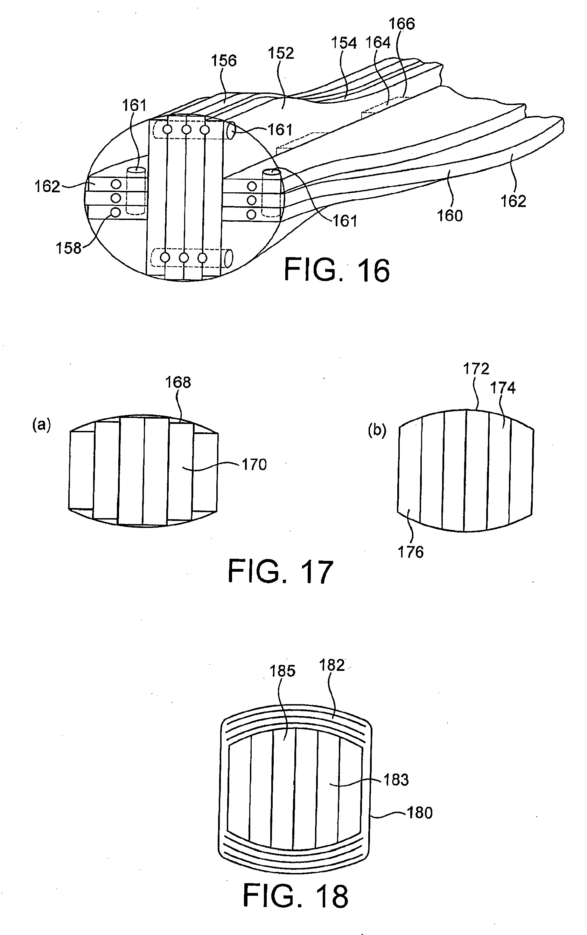

Figure 16 is a schematic perspective view of a spar for a tidal turbine blade in accordance with a further embodiment of the present invention. For some tidal turbine blades, such as those used on cross-flow turbines, the loads may not always act in the same direction. In the blade structure of Figure 16, the spar 152 includes a central part 154 extending between the major blade surfaces with the laminate sheets 156 being transverse and extending substantially orthogonally to the major blade surfaces. The spar 152 additionally includes opposed edge portions 158, 160 on opposite sides of the central part 154. The edge portions 158, 160 extend towards respective leading and trailing edges of the blade, to carry edgewise loads. The laminated composite material sheets 162 in the edge portions 158, 160 are orthogonal to the laminate sheets 156 of the central part 154, and extend substantially in the plane of the blade. The edge portions 158, 160 may be located and attached to the central part 154 of the spar 152 by complementary lugs 164 and slots 166 as shown in phantom. The central part 154 and the edge portions 158, 160 may incorporate root fixings 161 at the inboard root end, for example having the structure of the various embodiments described above.

Figures 17(a) and (b) are each a schematic cross-section through a spar for a tidal turbine blade in accordance with respective further embodiments of the present invention. In Figure 17(a) the longitudinal edges 168 of the laminate sheets 170 form a stepped configuration, with the sheets 170 having varying width in the transverse direction extending between the major blade surfaces. The steps may be at least partially filled with additional longitudinal fibre, for example by bonding pultrusions into the steps which are substantially triangular in cross-section. Alternatively, in Figure 17(b) the longitudinal edges 172 of the laminate sheets 174 form a smoothly arcuate configuration. The edges 172 are cut at an angle to the plane of the sheet 174 to form a cut edge which is not perpendicular to the sheet 174, as in Figure 17(a). Such an arcuate configuration allows a smoother cross-section of the spar 176 to be formed, which may improve the strength of the spar 176 by maximising the amount of material in the spar 176, particularly those fibres furthest from the neutral axis of bending. Furthermore, such an arcuate configuration may maximise the bond area between the profiled sheets 174. An arcuate configuration may alternatively be achieved by shaping the cross-section after assembling the profiled sheets 174 to achieve smoothly arcuate longitudinally extending opposed surfaces of the spar 176. In the embodiment of Figure 17(a) the sheets may be of different thickness, for example having one or more relatively thick central sheets and one or more relatively thin outer sheets to reduce the size of the steps in the spar cross-section.

Figure 18 is a schematic cross-section through a spar 180 for a tidal turbine blade in accordance with a further embodiment of the present invention. For achieving increased strength, particularly with high edgewise or torsional loading, the central portion 183 of the spar 180 is wrapped circumferentially with additional composite laminate material 182 prior to fitting the shells forming the opposed blade surfaces. The central portion 183 includes orthogonally oriented sheets 185. The composite laminate material 182 typically comprises fibres at +/-45 degrees to the axial direction of the spar 180. The composite laminate material 182 may additionally comprise, integral with the wrapped material or as one or more inserted separate layers, additional longitudinally extending fibres, oriented axially along the spar 180, which may be bonded or laminated onto the spar 180. Such a reinforced configuration may be beneficial for instance in the arrangement shown in Figure 8, in which a cylindrical root moulding is adhesively bonded to the root end of the spar, and the load should be transferred gradually to the root laminate.

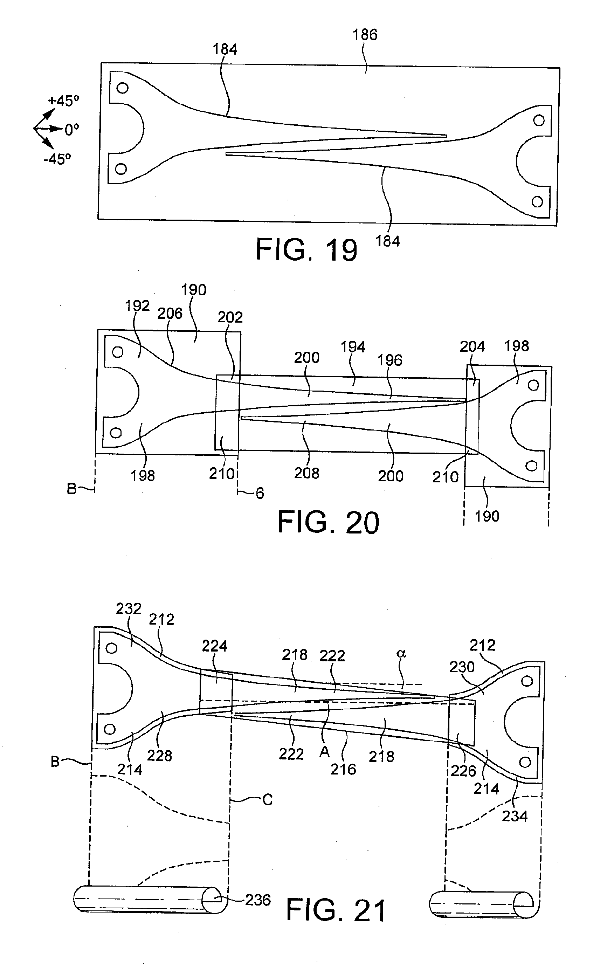

Figure 19 is a schematic plan view showing how a spar for a tidal turbine blade may be formed from a layer of sheets of composite material in accordance with a further embodiment of the present invention. In the present invention the sheets are profiled by a cutting step to form a desired planar shape from a larger area sheet. This can lead to potential material wastage, as compared to known methods where sheets are cut to fill a mould. Figure 19 shows how the profile 184 is cut from a central part of the larger area sheet 186. It may be seen that the material wastage is significant even if care is taken in the nesting of plural profiles, two being shown in Figure 19, to be cut from a common sheet 186. This wastage may comprise as much as three times the composite material actually used in the spar of the blade.

Figure 20 illustrates a manufacturing method in which each sheet profile is formed from plural overlapping plies. A first stack of plies 190 is employed to provide composite material for the root portion 192 of the spar and a second stack of plies 194 is employed to provide composite material for the longitudinally extending portion 196 of the spar. The first and second stacks of plies 190, 194 overlap to form a series of staggered butt joints. A full-width stack of plies 190 is only used at the broad root end part 198 of the spar, and a narrower stack of plies 194 is used at the narrower blade surface-supporting part 200 of the spar. As illustrated, the narrower stack of plies 194 may be used to produce two adjacent blade surface-supporting parts 200, each for a respective spar, and each end 202, 204 of the narrower stack of plies 194 overlaps a respective full-width stack of plies 190. A single narrower stack of plies 194 is centrally located between a pair of opposed full-width stack of plies 190, the three stacks of plies 190, 194 forming two sheet profiles 206, 208 after the cutting of the profiles 206, 208 from the stacks of plies 190, 194.

Although such a manufacturing step requires a series of staggered butt joints in the plies, where the first and second stacks of plies 190, 194 overlap, such a manufacturing configuration does offer the advantage of an ability to change the fibre type and direction at the overlap regions 210. The fibre in the first stack of plies 190 and the second stack of plies 194 may be different, for example glass in the first stack of plies 190 and carbon in the second stack of plies 194. The fibre orientation in the first stack of plies 190 and the second stack of plies 194 may be different, for example multiaxial, at 0, +45 and -45 degrees to the longitudinal axis, in the first stack of plies 190 and primarily unidirectional, at 0 degrees to the longitudinal axis, in the second stack of plies 194.

Thus in the highly-loaded and thin outboard section of the spar of the blade, formed from the blade surface-supporting parts 200, the laminate may consist primarily of fibres, such as carbon fibres, laid in the axial direction, whereas in the inboard section of the spar of the blade, formed from the root end parts 198, where loads are more varied in their direction, a greater proportion of off-axis fibres, such as +/- 45 degrees to the axial direction, may be used. In order to reduce the material cost of the spar, additionally the wider inboard part formed from the root end parts 198 may be of glass fibres instead of carbon fibres. Such a structure provides an added benefit of avoiding galvanic corrosion between carbon fibres and any metallic components used in the root fixing, because carbon fibres are present only in the blade part remote from the root, when the blade is mounted in water, particularly sea water. Figure 21 shows an alternative ply arrangement to provide a cutting pattern for the plies in order to minimise material wastage. Similar to the arrangement shown in Figure 20, each ply profile is formed from plural overlapping plies. A first full-width stack of plies 212 is employed to provide composite material for the root portion 214 of the spar and a second narrower stack of plies 216 is employed to provide composite material for the longitudinally extending portion 218 of the spar. The first and second stacks of plies 212, 216 overlap to form staggered butt joints. The narrower stack of plies 216 is used to produce two adjacent blade surface-supporting parts 222, each for a respective spar, and each end 224, 226 of the narrower stack of plies 216 overlaps a respective full-width stack of plies 212.

A single narrower stack of plies 216 is centrally located between a pair of opposed full-width stacks of plies 212, the three stacks of plies 212, 216 forming two sheet profiles 228, 230 after the cutting of the sheets 232, 234 from the stacks of plies 212, 216. In order to reduce material wastage from the narrower stack of plies 216, the narrower stack of plies 216 is oriented at an acute angle α to the axis of the longitudinally extending portion 218. This provides that reduced material is wasted from the longitudinal edges of the narrower stack of plies 216. Such a pattern can be readily nested if fabric widths are chosen appropriately. Also, the full-width stack of plies 212 may have a plan shape pre-cut to match that of the root portion 214, but oversized.

The narrow diagonal stack of plies 216 for the outboard part of the profiles 228, 230 may be formed from collimated unidirectional prepreg material, in which unidirectional fibres are within a resin matrix. In one arrangement a single diagonal stack of plies 216 is used for both of longitudinally extending portions 218. In an alternative arrangement, a pair of transversely overlapping ply portions are employed to form the diagonal stack of plies 216, the ply portions being joined by a transverse butt joint 232 indicated by the dashed line A of Figure 21. Such a collimated unidirectional prepreg material is not weakened by such transverse butt joints.

The full-width stacks of plies 212 for the inboard part of the blade spar may be cut from a roll 236 of fabric in which the fibres are oriented at 90/45/-45 degrees to the fabric edge, i.e. 0/45/-45 degrees to the blade axis, the roll edges being shown by the dashed lines B, C of Figure 21. The same roll 236 may be used for the embodiment of Figure 20, which includes the dashed lines B and C. Material wastage is therefore reduced, and comparable to conventional spar manufacturing methods.

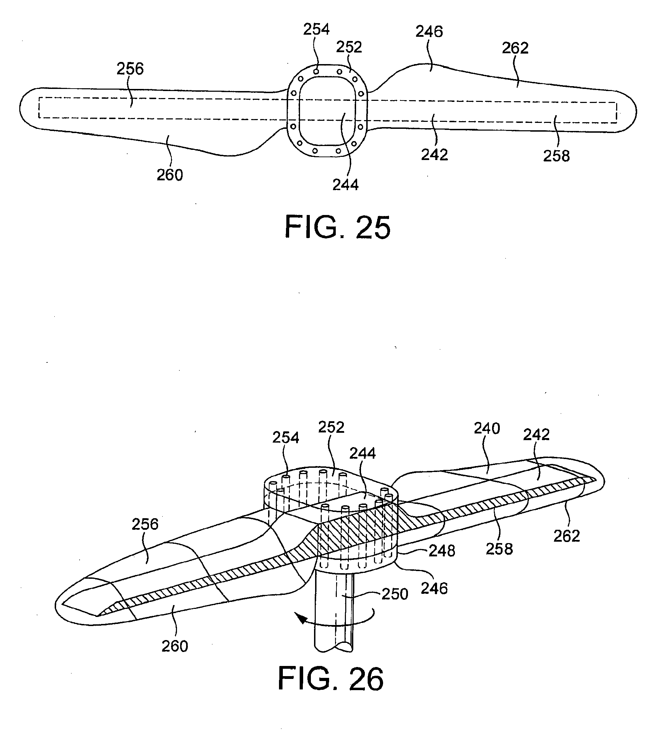

Figures 25 and 26 illustrate a non-pitching tidal turbine blade 240 in accordance with a further embodiment of the present invention. The blade 240 of this embodiment incorporates, like the embodiment of Figures 22 to 24, a through-spar 242. The through-spar 242 has a central portion 244 mounted to a lower portion 246 of a hub 248 fitted to a rotatable axle 250. An upper portion 252 of the hub 248 is fitted over the central portion 244 and clamped by an annular array of bolts 254 to the lower portion 246. As for the previous embodiments, each of the opposed end portions 256,258 of the through-spar 242 is covered by a respective blade shell 260, 262 bonded thereto.

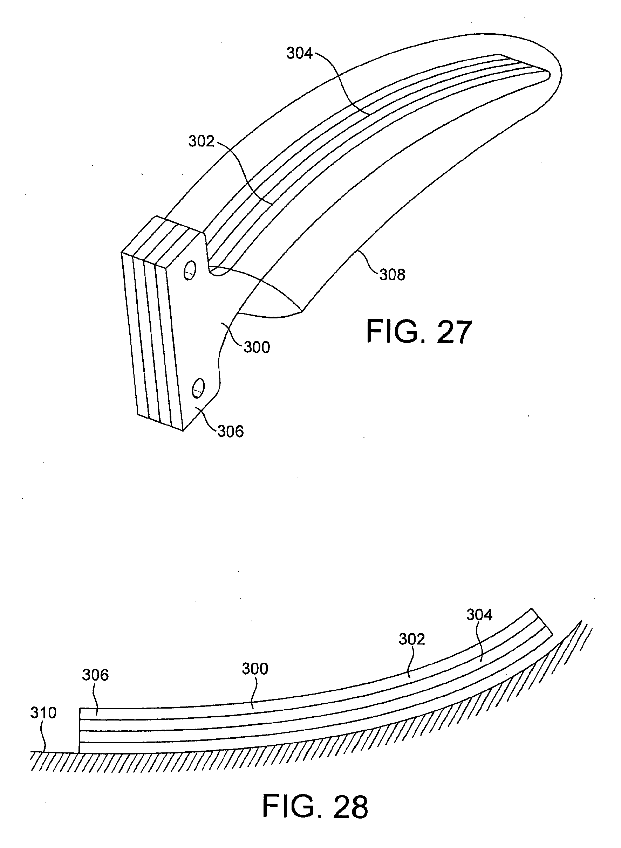

Referring to Figures 27 and 28, there is shown a spar for a tidal turbine blade in accordance with a further embodiment of the present invention. In this embodiment the spar 300 has some curvature along all or a portion of its length, the curvature being achieved by curving the individual plies 302 of the stack 304 forming the spar 300. The curvature is about one or more axes in the plane of the plies 302 and the spar 300. The stack 304 is therefore substantially planar, but with some curvature. The curvature may be about a single common axis, for example an axis parallel to the plane of a T-shaped mounting portion 306 at one end of the stack 304. This provides, as shown in the Figures 27 and 28, curvature in the plies 302 and the resultant stack 304 which is within the plane of the plies 302 and the stack 304.

Alternatively, the curvature may be about more than one axis, for example to form a twisted configuration which is additionally curved about an axis extending generally along the longitudinal direction of the spar 300.

Figure 27 shows a correspondingly curved blade shell 308 fitted to the curved spar 300.

This embodiment provides the additional advantage that it is easier to manufacture a curved spar 300 by bending the plies 302 about an axis out of the plane of the plies 302, rather than about an axis within the plane of the plies 302. During the manufacturing process, the plies 302 may be sequentially laid up on a curved mould surface 310, as shown in Figure 28, each ply 302 being individually curved or bent upon being laid up into the stack 304.

The incorporation of a curved spar into a tidal turbine blade provides the advantage that the bend-twist coupling of the spar to the hub reduces the load on the spar.

In any of the embodiments of the present invention, the sheets may be formed of pultruded sheets, optionally flat, but which may incorporate some curvature for example as shown in Figures 27 and 28.

In any of these embodiments, the spar can be constructed by the following method, which is merely illustrative. A sheet of constant thickness laminate is produced, by stacking plural plies, which may be nominally rectangular in plan. The laminate consists of a plurality of fibre reinforced composite plies with the fibres predominantly oriented along the long (axial) direction of the sheet. After the laminate has the required number of plies to provide the desired final thickness, the laminate is then cured so as fully to cure the resin in the fibre reinforced resin composite material. The curing step is typically carried out under vacuum, in a press, or in an autoclave. Typically there may be around 50%-90% of fibres oriented axially, i.e. at 0 degrees to the axial direction, and the remainder at +/-45 degrees to the axial direction.

The cured laminate is then cut, typically by laser cutting or water jet cutting, to form a series of one or more sheet profiles resembling the front view of the spar. The sheet profiles may have internal holes cut to make them lighter, to assist joining them together, or to make the connection to the rest of the turbine at the blade root, as described earlier.

By making these plural sheet profiles of different shape and stacking them together, a spar with an approximately aerofoil cross-section can be assembled.

In any of the embodiments of the manufacturing method of the invention, each fibrous ply, which may comprise a prepreg or fibrous material for subsequent resin infusion, may be initially precut substantially to the required final shape and dimensions of the relevant portion of the spar. The cut plies, rather than uncut rectangular plies as described above, are laid up as illustrated generally in Figures 19 to 21. Then the sheets are formed, as described above, having substantially the required final shape and dimensions. If necessary, a minimal trimming operation may be carried out on the sheets. Precutting the plies would provide a cost-effective way to make the spar - although there would be a greater amount of initial ply cutting involved, it would reduce wastage of material, particularly resin material if vacuum resin infusion is used to make the sheets, and the amount of heavy cutting of the sheets would be minimised.

The sheet profiles are adhesively bonded together, optionally under pressure to ensure a strong bond. They may additionally be bolted together, as shown in Figure 3, to provide a clamping force for the adhesive joint and to ensure correct alignment of the sheet profiles. The use of a flat mould shape during the lay-up and bonding process in such a method facilitates the manufacturing method as compared to known methods for manufacturing spars using a mould having a curved moulding surface. This forms a spar of desired shape and configuration.

If required chordal-shaped packing pieces as illustrated in Figures 13 and 14 or edge pieces as illustrated in Figure 16 may be bonded to the spar.

After formation of the spar, root connections are fitted to the spar, for example T-bolts or inserts as described earlier.

The spar is then incorporated into the tidal turbine blade. A shell, typically comprising opposed shall halves which are bonded together at the leading and trailing edges of the combined blade, is fitted over the spar and bonded to it, to give the blade the required smooth aerofoil shape.

An alternative method to manufacture the sheets is automated tape laying, as known in the state of the art, which may provide reduced material wastage and reduced labour during manufacture, and permit further optimised fibre orientations. Again, the use of a flat mould shape in such a method would facilitate the manufacturing method as compared to known methods of laying tape into a mould having a curved moulding surface.

The present invention has application in the manufacture of oscillating foil tidal turbine blades, cross-flow tidal turbine blades and axial flow tidal turbine blades, because all of these blade types have very high loading and relatively thin blade sections and their root connections can generate high shear loads. The invention also has application for tidal turbine blade designs having a rudder-style attachment such as shown in Figure 14.

The manufacturing process may readily be automated because all the plies may have the same regular shape, and are laid onto a flat surface instead of a curved mould.

Ply drop-offs, necessary for the tapering of a conventional spar, can be avoided. Thus thicker plies can be used without incurring the strength penalties associated with terminating thick plies. By using thicker plies the laminating time can be reduced. For instance the Germanischer Lloyd Guidelines for Certification of Wind Turbines 2010 limit the weight of plies to 1300g/m² of fibre at ply drop-offs unless separate proof of strength is provided. By avoiding ply drop-offs in the manufacture of the preferred tidal turbine blades of the present invention, fabrics having a higher weight per unit area can be employed.

In the manufacture of a conventional spar, exothermic reactions during curing of the resin may impose a practical limit on the thickness of spar that can be produced and the speed at which it can be cured. In the present invention however, the initial sheet of laminate is cured, rather than the entire spar. Accordingly, such thickness limits only apply to the initial sheet of laminate, which can therefore have significant thickness. Additionally, the thickness of the initial sheet of laminate may be selected according to the maximum thickness which can effectively be cut by the technique selectively used to cut the profiles.

Since the shape of the sheets is simple, flat or nearly flat, and typically rectangular, off-axis plies can be easily made from collimated prepreg rather than stitched biaxial layers. Collimated prepreg is stronger and cheaper than stitched fabric because it avoids the stress concentrations and process costs of the stitching operation.

Furthermore, since the plies are aligned in the plane of the maximum load direction, the spar carries shear forces through fibres rather than just resin or adhesive. Accordingly, the spar according to the preferred embodiments of the invention can withstand much higher shear forces than even a solid laminated spar consisting of plies laminated in the span-chord plane.

The spar according to the preferred embodiments of the invention is suited to carrying Brazier loads caused by steep changes of shape typically seen at the transition between the root and the aerofoil section of a tidal turbine blade. This means that the transition can be steeper than would be the case with a conventional wind-turbine-style design, allowing the aerofoil section to be extended further inboard towards the root section. The result is a tidal turbine blade which is capable of generating more power from the same blade length.

Integrated root connection solutions are easily incorporated during the cutting process, eliminating the extra step of drilling holes for T-bolts or bonded inserts after fabricating the blade.

Alternative methods for a pitch bearing connection, such as the twin radial bearings, axially spaced apart, as used in the embodiments of Figures 13 to 14 and Figures 22 to 24, can be employed in the spars according to the various embodiments of the invention. In contrast, typical known hollow spar constructions may not achieve sufficient shear strength between the spaced bearings without spacing the bearings much further apart.

Spars that taper at both ends, called a "through spar", can easily be constructed in one integral piece according to preferred aspects of the invention. Such a construction would be difficult using a known male mandrel method, as described above with respect to Figure 1 and as used on many known wind turbine blades, because of the problem of extracting the mandrel from the centre of a through spar which would be closed at both opposite ends. A through-spar produced according to the embodiments of the invention is useful in oscillating foil tidal turbines and in tidal turbines which use twin radial bearings for attachment to the hub, as illustrated in Figures 22 to 24.

Through-spars produced according to the embodiments of the invention are also useful when incorporated into non-pitching blades, where a pitch bearing is not required and a rotor with an even number of blades can have opposite blades directly connected together, thereby minimising the bending moments to be carried by the hub connection, as illustrated in Figures 25 and 26.

The cost of maintenance and repair of submerged tidal turbines is high, for example much greater than for onshore wind turbines. The preferred embodiments of the present invention provide an advantage that the constructions can eliminate the use of highly-loaded adhesive joints in an underwater environment, which enhances the reliability of the tidal turbine incorporating the tidal turbine blade. The preferred embodiments of the present invention can also provide significant labour cost savings, efficiency and reliability improvements compared to other methods, particularly for an axial-flow turbine construction.

Various other modifications, falling within the scope of the appended claims, to the tidal turbine blades of the present invention, and their manufacturing process, will be apparent to those skilled in the art.

## Claims

1. A spar for a water-driven turbine blade, the spar (32) comprising a substantially planar stack of first sheets (34) secured together, each first sheet (34) comprising fibre reinforced resin composite material, wherein opposed edges of the first sheets (34) define opposed edges of the stack, the edges of the stack defining a mounting portion for mounting the spar to a turbine member and at least one elongate blade supporting portion, the first sheets (34) extending in a longitudinal direction of the elongate blade supporting portion.

2. A spar according to claim 1, wherein (i) the at least one elongate blade supporting portion includes unidirectional fibres substantially aligned along a longitudinal axis of the elongate blade supporting portion, optionally wherein the mounting portion includes fibres inclined to the longitudinal axis or (ii) the at least one elongate blade supporting portion includes unidirectional fibres aligned at an angle of no more than +/- 20 degrees to a longitudinal axis of the elongate blade supporting portion, optionally wherein the mounting portion includes fibres inclined to the longitudinal axis.

3. A spar according to any foregoing claim, wherein each first sheet (34) comprises a plurality of laminated fibrous plies, optionally wherein at least some of the plies have unidirectional fibres and at least some of the plies have multiaxial fibres.

4. A spar according to any foregoing claim, wherein at least one of the first sheets (34) comprises a first fibre material at the mounting portion and a second fibre material at the blade supporting portion and/or wherein at least one of the first sheets (34) comprises a first fibre orientation at the mounting portion and a second fibre orientation at the blade supporting portion.

5. A spar according to any foregoing claim, wherein the mounting portion comprises a root mounting portion for mounting an end of the spar (32) to a turbine member,
optionally wherein the root mounting portion includes mechanical fittings (84, 86) for fitting the spar to the turbine member,
further optionally wherein the mechanical fittings include an elongate nut (90) having a plurality of spaced threaded holes for receiving a plurality of bolts for fitting the spar to the turbine member, the elongate nut extending through a plurality of the first sheets of the spar,
yet further optionally wherein the root mounting portion includes an outwardly directed flange (144) in the plane of the spar (150), the flange being adapted to be bolted to the turbine member and/or the root mounting portion includes a central cavity (82) located between opposed ends of the root mounting portion.

6. A spar according to claim 5, wherein the root mounting portion includes a pair of longitudinally spaced annular bearing surfaces (100, 102) surrounding the spar (98), optionally wherein a first endmost annular bearing surface (102) has a smaller diameter than a second innermost annular bearing surface (100).

7. A spar according to any one of claims 1 to 4, wherein the spar includes two opposite elongate blade supporting portions (120, 122) on opposed sides of a central mounting portion for mounting a central part of the spar to a turbine member, optionally wherein the mounting portion includes a pair of longitudinally spaced annular bearing surfaces (128, 130) each surrounding the spar.

8. A spar according to any foregoing claim, further comprising at least one edge portion (158, 160) extending outwardly from a face of the stack of first sheets (156), the edge portion (158, 160) comprising a stack of second sheets (162), each second sheet (162) comprising fibre reinforced resin composite material,
optionally wherein each second sheet (162) comprises a plurality of laminated fibrous plies,
further optionally wherein at least some of the plies of the second sheets (162) have unidirectional fibres and at least some of the plies of the second sheets (162) have multiaxial, optionally biaxial, fibres,
yet further optionally wherein at least one of the second sheets (162) comprises a first fibre material at a mounting portion of the edge portion and a second fibre material at a blade supporting portion of the edge portion and/or wherein at least one of the second sheets (162) comprises a first fibre orientation at a mounting portion of the edge portion and a second fibre orientation at a blade supporting portion of the edge portion.

9. A spar according to any foregoing claim, wherein the spar (300) is curved, the substantially planar first sheets (302) have a curvature about at least one axis in the plane of the sheets (302).

10. A water-driven turbine blade including a spar according to any foregoing claim, the turbine blade (30) including opposite first and second surfaces (36, 38) each defining a respective load bearing blade surface, and the spar (32) being located between the first and second surfaces, the first sheets (34) of the stack lying in a plane extending between the first and second surfaces, optionally wherein the opposed edges of the stack are attached to opposed inner faces of the first and second surfaces or wherein the opposed edges of the stack each form a respective part of the first and second surfaces.

11. A water-driven turbine blade according to claim 10, wherein the first sheets (34) of the stack lie in a plane extending substantially orthogonally to a chordal direction (C-C) of the turbine blade.

12. A turbine including a water-driven turbine blade according to any one of claims 10 to 11, which is (i) an axial flow turbine including plural radial turbine blades fixed to a rotatable hub which is caused to rotate about an axis by water movement over the turbine blade surfaces, or (ii) a cross flow turbine including the turbine blade fixed to a support for rotation substantially about a longitudinal axis of the turbine blade by water movement over the turbine blade surfaces, or (iii) a tidal turbine.

13. A method of manufacturing a spar for a water-driven turbine blade, the method comprising the steps of:
a. laying up a plurality of plies (190, 194) of fibre reinforced resin composite material to form a substantially planar laminate thereof;
b. curing the resin to form a cured sheet from the laminate;
c. cutting the sheet to form opposed edges which define a part of a mounting portion for mounting the spar to a turbine member and a part of at least one elongate blade supporting portion; and
d. assembling together a substantially planar stack of the cut sheets to form a spar, the opposed edges of the sheets being arranged to form opposed edges of the stack, the edges of the stack defining the mounting portion for mounting the spar to a turbine member and the at least one elongate blade supporting portion, the sheets extending in a longitudinal direction of the elongate blade supporting portion.

14. A method according to claim 13, wherein (i) the at least one elongate blade supporting portion includes unidirectional fibres substantially aligned along a longitudinal axis of the elongate blade supporting portion, optionally wherein the mounting portion includes fibres inclined to the longitudinal axis, or (ii) wherein the at least one elongate blade supporting portion includes unidirectional fibres aligned at an angle of no more than +/-20 degrees to a longitudinal axis of the elongate blade supporting portion, optionally wherein the mounting portion includes fibres inclined to the longitudinal axis.

15. A method according to any one of claims 13 to 14, wherein the mounting portion is formed from a plurality of first plies (190) and the blade supporting portion is formed from a plurality of second plies (194), the first and second plies (190, 194) being interconnected at adjacent edges,
optionally (i) wherein the first plies (190) and the second plies (194) are interconnected by a staggered butt joint at the adjacent edges, and/or
(ii) wherein steps (a) and (b) are carried out to produce two sheets simultaneously, each of two parts of spaced mounting portions being formed from a respective laminate of first plies (190) and each of two parts of blade supporting portions being formed from a common laminate of second plies (194), the laminate of the second plies (194) being located between, and interconnected at adjacent edges to, a respective laminate of the first plies, and/or
(iii) wherein the first and second plies (190, 194) each have a respective different shape and dimensions substantially corresponding respectively to the shape and dimensions of the mounting portion and the blade supporting portion formed therefrom, and/or
(iv) wherein at least some of the plies (190, 194) have unidirectional fibres and at least some of the plies have multiaxial, optionally biaxial, fibres, and/or
(v) wherein at least one of the plies (190, 194) comprises a first fibre material at the mounting portion and a second fibre material at the blade supporting portion.

## Patentansprüche

1. Ein Holm für eine wasserbetriebene Turbinenschaufel, wobei der Holm (32) einen im Wesentlichen planaren Stapel zusammengehaltener erster Bögen (34) umfasst, wobei jeder erste Bogen (34) Faserverbundwerkstoff umfasst, wobei gegenüberliegende Kanten der ersten Bögen (34) die gegenüberliegenden Kanten des Stapels definieren, wobei die Kanten des Stapels einen Montageabschnitt zur Montage des Holms an einem Turbinenelement und zumindest ein längliches Schaufeltragteil definieren, und wobei sich die ersten Bögen (34) in einer Längsrichtung des länglichen Schaufeltragteils erstrecken.

2. Ein Anspruch 1 entsprechender Holm, wobei (i) das zumindest eine längliche Schaufeltragteil unidirektionale Fasern umfasst, die im Wesentlichen entlang einer Längsachse des länglichen Schaufeltragteils ausgerichtet sind, bzw. wahlweise, wobei der Montageabschnitt Fasern enthält, die zur Längsachse geneigt sind, oder (ii), wobei das zumindest eine längliche Schaufeltragteil unidirektionale Fasern umfasst, die in einem Winkel von höchstens +/- 20 Grad zu einer Längsachse des länglichen Schaufeltragteils ausgerichtet sind, bzw. wahlweise, wobei der Montageabschnitt Fasern enthält, die zur Längsachse geneigt sind.

3. Ein einem vorstehenden Anspruch entsprechender Holm, wobei jeder erste Bogen (34) eine Vielzahl von laminierten, fasrigen Lagen umfasst, bzw. wahlweise, wobei zumindest einige der Lagen unidirektionale Fasern und zumindest einige der Lagen multiaxiale Lagen haben.

4. Ein einem vorstehenden Anspruch entsprechender Holm, wobei zumindest einer der ersten Bögen (34) ein erstes Fasermaterial am Montageabschnitt und ein zweites Fasermaterial am Schaufeltragteil umfasst, bzw. wobei zumindest einer der ersten Bögen (34) eine erste Faserorientierung am Montageabschnitt und eine zweite Faserorientierung am Schaufeltragteil aufweist.

5. Ein einem vorstehenden Anspruch entsprechender Holm, wobei der Montageabschnitt einen Fußmontageabschnitt aufweist, um ein Ende des Holms (32) an einem Turbinenelement zu montieren, bzw. wahlweise, wobei der Fußmontageabschnitt mechanische Verbindungselemente (84, 86) aufweist, um den Holm am Turbinenelement anzubringen,
bzw. ferner wahlweise, wobei die mechanischen Verbindungselemente eine längliche Mutter (90) umfassen, die eine Vielzahl beabstandeter Gewindelöcher hat, um zum Anbringen des Holms am Turbinenelement eine Vielzahl von Bolzen einzufügen, wobei sich die längliche Mutter durch eine Vielzahl der ersten Bögen des Holms ausdehnt,
bzw. ferner noch wahlweise, wobei der Fußmontageabschnitt einen nach außen gerichteten Flansch (144) in der Ebene des Holms (150) aufweist und der Flansch so ausgeführt ist, um mit dem Turbinenelement verschraubt zu werden, bzw. wobei der Fußmontageabschnitt einen zentralen Hohlraum (82) aufweist, der sich zwischen gegenüberliegenden Enden des Fußmontageabschnitts befindet.

6. Ein Anspruch 5 entsprechender Holm, wobei der Fußmontageabschnitt ein Paar von längs beabstandeten, ringförmigen Auflagerflächen (100, 102) aufweist, die den Holm (98) einfassen, bzw. wahlweise, wobei eine erste, äußerste ringförmige Auflagerfläche (102) einen kleineren Durchmesser hat als eine zweite, innerste ringförmige Auflagerfläche (100).

7. Ein einem der Ansprüche 1 bis 4 entsprechender Holm, wobei der Holm zwei gegenüberliegende, längliche Schaufeltragteile (120, 122) an gegenüberliegenden Seiten eines zentralen Montageabschnitts umfasst, um einen zentralen Teil des Holms an einem Turbinenelement zu montieren, bzw. wahlweise, wobei der Montageabschnitt ein Paar längs beabstandeter, ringförmiger Auflagerflächen (128, 130) aufweist, die den Holm jeweils einfassen.

8. Ein einem vorstehenden Anspruch entsprechender Holm, der ferner zumindest einen Kantenabschnitt (158, 160) aufweist, der sich von einer Fläche des Stapels von ersten Bögen (156) nach außen erstreckt, wobei der Kantenabschnitt (158, 160) einen Stapel zweiter Bögen (162) umfasst und jeder zweite Bogen (162) Faserverbundwerkstoff umfasst,
bzw. wahlweise, wobei jeder zweite Bogen (162) eine Vielzahl laminierter, fasriger Lagen umfasst,
bzw. ferner wahlweise, wobei zumindest einige der Lagen der zweiten Bögen (162) unidirektionale Fasern und zumindest einige der Lagen der zweiten Bögen (162) multiaxiale, bzw. wahlweise biaxiale Fasern haben,
bzw. wahlweise des Weiteren, wobei zumindest einer der zweiten Bögen (162) ein erstes Fasermaterial an einem Montageabschnitt des Kantenabschnitts und ein zweites Fasermaterial an einem Schaufeltragteil des Kantenabschnitts aufweist, bzw. wobei zumindest einer der zweiten Bögen (162) eine erste Faserorientierung an einem Montageabschnitt des Kantenabschnitts und eine zweite Faserorientierung an einem Schaufeltragteil des Kantenabschnitts aufweist.

9. Ein einem vorstehenden Anspruch entsprechender Holm, wobei der Holm (300) gekrümmt ist und die im Wesentlichen planaren ersten Bögen (302) eine Krümmung um zumindest eine Achse in der Ebene der Bögen (302) aufweisen.

10. Eine wasserbetriebene Turbinenschaufel, die einen einem vorstehenden Anspruch entsprechenden Holm umfasst, wobei die Turbinenschaufel (30) gegenüberliegende erste und zweite Oberflächen (36, 38) aufweist, die jeweils eine entsprechende Last aufnehmende Schaufelfläche definieren, und wobei der Holm (32) zwischen den ersten und zweiten Oberflächen angeordnet ist, wobei die ersten Bögen (34) des Stapels in einer Ebene liegen, die sich zwischen den ersten und zweiten Oberflächen ausdehnt, bzw. wahlweise, wobei die gegenüberliegenden Kanten des Stapels an gegenüberliegenden Innenflächen der ersten und zweiten Oberflächen angebracht werden oder wobei die gegenüberliegenden Kanten des Stapels jeweils einen entsprechenden Teil der ersten und zweiten Oberflächen bilden.

11. Eine Anspruch 10 entsprechende wasserbetriebene Turbinenschaufel, wobei die ersten Bögen (34) des Stapels in einer Ebene liegen, die sich im Wesentlichen orthogonal zu einer akkordischen Richtung (C-C) der Turbinenschaufel ausdehnt.

12. Eine Turbine, die eine einem der Ansprüche 10 bis 11 entsprechende wasserbetriebene Turbinenschaufel umfasst und (i) eine Axialturbine ist, die plurale radiale Turbinenschaufeln umfasst, die an einer drehbaren Nabe angebracht sind, die durch die Wasserbewegung über die Turbinenschaufeloberflächen veranlasst wird, sich um eine Achse zu drehen, oder (ii) eine Durchström-Turbine, die die an einer Stütze angebrachte Turbinenschaufel umfasst, um sich infolge der Wasserbewegung über die Turbinenschaufeloberflächen im Wesentlichen um eine Längsachse der Turbinenschaufel zu drehen, oder (iii) eine Gezeitenströmungsturbine.

13. Ein Verfahren zur Herstellung eines Holms für eine wasserbetriebene Turbinenschaufel, wobei das Verfahren die folgenden Schritte umfasst:
eine Vielzahl von Lagen (190, 194) von Faserverbundwerkstoff aufeinanderlegen, um daraus ein im Wesentlichen planares Laminat zu bilden;
den Harz aushärten, um aus dem Laminat einen ausgehärteten Bogen zu bilden;
den Bogen schneiden, um gegenüberliegende Kanten zu bilden, die einen Teil eines Montageabschnitts zum Montieren des Holms an einem Turbinenelement sowie einen Teil zumindest eines länglichen Schaufeltragteils definieren; und
einen im Wesentlichen planaren Stapel aus den geschnittenen Bögen zusammenstellen, um einen Holm zu bilden, wobei die gegenüberliegenden Kanten der Bögen so angeordnet werden, um gegenüberliegende Kanten des Stapels zu bilden, wobei die Kanten des Stapels den Montageabschnitt definieren, um den Holm an einem Turbinenelement und an dem zumindest einen länglichen Schaufeltragteil zu montieren, wobei sich die Bögen in einer Längsrichtung des länglichen Schaufeltragteils ausdehnen.

14. Ein Anspruch 13 entsprechendes Verfahren, wobei (i) das zumindest eine längliche Schaufeltragteil unidirektionale Fasern umfasst, die im Wesentlichen entlang einer Längsachse des länglichen Schaufeltragteils ausgerichtet sind, bzw. wahlweise, wobei der Montageabschnitt Fasern beinhaltet, die zur Längsachse geneigt sind, oder (ii), wobei das zumindest eine längliche Schaufeltragteil unidirektionale Fasern umfasst, die in einem Winkel von höchstens +/- 20 Grad zu einer Längsachse des länglichen Schaufeltragteils ausgerichtet sind, bzw. wahlweise, wobei der Montageabschnitt Fasern enthält, die zur Längsachse geneigt sind.

15. Ein einem der Ansprüche 13 bis 14 entsprechendes Verfahren, wobei der Montageabschnitt aus einer Vielzahl erster Lagen (190) und das Schaufeltragteil aus einer Vielzahl zweiter Lagen (194) gebildet ist, wobei die ersten und zweiten Lagen (190, 194) an benachbarten Kanten miteinander verbunden sind,
bzw. wahlweise (i), wobei die ersten Lagen (190) und die zweiten Lagen (194) durch eine versetzte Stoßfuge an den benachbarten Kanten miteinander verbunden sind, bzw.
(ii) wobei Schritte (a) und (b) durchgeführt werden, um gleichzeitig zwei Bögen zu erzeugen, wobei jedes von zwei Teilen beabstandeter Montageabschnitte aus einem jeweiligen Laminat der ersten Lagen (190) und jedes von zwei Teilen der Schaufeltragteile aus einem gemeinsamen Laminat der zweiten Lagen (194) geformt werden, wobei das Laminat der zweiten Lagen (194) zwischen einem jeweiligen Laminat der ersten Lagen angeordnet und an bzw. mit diesem an benachbarten Kanten verbunden ist, bzw.
(iii)wobei die ersten und zweiten Lagen (190, 194) jeweils von unterschiedlicher Form und unterschiedlichen Dimensionen sind, die im Wesentlichen jeweils der Form und den Dimensionen des Montageabschnitts und des daraus geformten Schaufeltragteils entsprechen, bzw.
(iv) wobei zumindest einige der Lagen (190, 194) unidirektionale Fasern sowie zumindest einige der Lagen multiaxiale, bzw. wahlweise biaxiale Fasern haben, bzw.
(v) wobei zumindest eine der Lagen (190, 194) ein erstes Fasermaterial am Montageabschnitt und ein zweites Fasermaterial am Schaufeltragteil umfasst.

## Revendications

1. Un longeron pour une aube de turbine entraînée par l'eau, le longeron (32) comprenant un empilement sensiblement plane de premières feuilles (34) fixées ensemble, chaque première feuille (34) comprenant un matériau composite de résine renforcé par des fibres, dans lequel des bords opposés des premières feuilles (34) définissent des bords opposés de l'empilement, les bords de l'empilement définissant une partie de montage destinée au montage du longeron sur un élément de turbine et au moins une partie de support d'aube allongée, les premières feuilles (34) s'étendant dans une direction longitudinale de la partie de support d'aube allongée.

2. Un longeron selon la revendication 1, dans lequel (i) la au moins une partie de support d'aube allongée comprend des fibres unidirectionnelles sensiblement alignées le long d'un axe longitudinal de la partie de support d'aube allongée, optionnellement dans lequel la partie de montage comprend des fibres inclinées par rapport à l'axe longitudinal ou (ii) la au moins une partie de support d'aube allongée comprend des fibres unidirectionnelles alignées à un angle qui ne dépasse par +/- 20 degrés par rapport à un axe longitudinal de la partie de support d'aube allongée, optionnellement dans lequel la partie de montage comprend des fibres inclinées par rapport à l'axe longitudinal.

3. Un longeron selon l'une quelconque des revendications précédentes, dans lequel chaque première feuille (34) comprend une pluralité de couches fibreuses laminées, optionnellement dans lequel au moins certaines des couches possèdent des fibres unidirectionnelles et au moins certaines des couches possèdent des fibres multiaxiales.

4. Un longeron selon l'une quelconque des revendications précédentes, dans lequel au moins une des premières feuilles (34) comprend un premier matériau fibreux à la partie de montage et un second matériau fibreux à la partie de support d'aube et/ou dans lequel au moins une des premières feuilles (34) comprend une première orientation de fibres à la partie de montage et une seconde orientation de fibres à la partie de support d'aube.

5. Un longeron selon l'une quelconque des revendications précédentes, dans lequel la partie de montage comprend une partie de montage de racine pour le montage d'une extrémité du longeron (32) à un élément de turbine,
optionnellement dans lequel la partie de montage de racine comprend des raccords mécaniques (84, 86) pour raccorder le longeron à l'élément de turbine,
optionnellement en outre dans lequel les raccords mécaniques comprennent un écrou allongé (90) ayant une pluralité de trous filetés espacés pour recevoir une pluralité de boulons pour raccorder le longeron à l'élément de turbine, l'écrou allongé s'étendant au travers d'une pluralité de premières feuilles du longeron,
encore optionnellement en outre dans lequel la partie de montage de racine comprend une bride dirigée vers l'extérieur (144) dans le plan du longeron (150), la bride étant adaptée pour être boulonnée à l'élément de turbine et/ou la partie de montage de racine comprend une cavité centrale (82) située entre des extrémités opposées de la partie de montage de racine.

6. Un longeron selon la revendication 5, dans lequel la partie de montage de racine comprend une paire de surfaces d'appui annulaires espacées de manière longitudinale (100, 102) entourant le longeron (98) optionnellement dans lequel une première surface d'appui annulaire d'extrémité (102) a un diamètre plus petit qu'une seconde surface d'appui annulaire d'intérieur (100).

7. Un longeron selon l'une quelconque des revendications de 1 à 4, dans lequel le longeron comprend deux parties de support d'aube allongées opposées (120, 122) sur des côtés opposés d'une partie de montage centrale pour le montage d'une partie centrale du longeron à un élément de turbine, optionnellement dans lequel la partie de montage comprend une paire de surfaces d'appui annulaires espacées de manière longitudinale (128, 130) chacune entourant le longeron.

8. Un longeron selon l'une quelconque des revendications précédentes, comprenant au moins en outre une partie de bord (158, 160) s'étendant vers l'extérieur à partir d'une face de l'empilement de premières feuilles (156), la partie de bord (158, 160) comprenant un empilement de secondes feuilles (162), chaque seconde feuille (162) comprenant du matériau composite de résine renforcé par des fibres,
optionnellement dans lequel chaque seconde feuille (162) comprend une pluralité de couches fibreuses laminées,
optionnellement en outre dans lequel certaines des couches des secondes feuilles (162) possèdent des fibres unidirectionnelles et au moins certaines des couches des secondes feuilles (162) possèdent des fibres multiaxiales, optionnellement biaxiales,
encore optionnellement en outre dans lequel au moins une des secondes feuilles (162) comprend un premier matériau fibreux à une partie de montage de la partie de bord et un second matériau fibreux à une partie de support d'aube de la partie de bord et/ou dans lequel au moins une des secondes feuilles (162) comprend une première orientation de fibres à une partie de montage de la partie de bord et une seconde orientation de fibre à une partie de support d'aube de la partie de bord.

9. Un longeron selon l'une quelconque des revendications précédentes, dans lequel le longeron (300) est courbé, les premières feuilles sensiblement planes (302) ont une courbure autour d'au moins un axe dans le plan des feuilles (302).

10. Une aube de turbine entraînée par l'eau comprenant un longeron selon l'une quelconque des revendications précédentes, l'aube de turbine (30) comprenant des premières et secondes surfaces opposées (36, 38) chacune définissant une surface d'aube portante respective, et le longeron (32) étant situé entre les premières et secondes surfaces, les premières feuilles (34) de l'empilement couchées dans un plan s'étendant entre les premières et secondes surfaces, optionnellement dans lequel les bords opposés de l'empilement sont attachés à des faces intérieures opposées des premières et secondes surfaces et/ou dans lequel les bords opposés de l'empilement forment chacun une partie respective des premières et secondes surfaces.

11. Une aube de turbine entraînée par l'eau selon la revendication 10, dans laquelle les premières feuilles (34) de l'empilement sont couchées dans un plan s'étendant sensiblement de manière orthogonale à une direction à la corde (C-C) de l'aube de turbine.

12. Une turbine comprenant une aube de turbine entraînée par l'eau selon l'une quelconque des revendications de 10 à 11, qui est (i) une turbine à flux axial comprenant plusieurs aubes de turbine radiales fixées à un moyeu rotatif qui est amené à tourner autour d'un axe par le mouvement de l'eau sur les surfaces d'aube de turbine, ou (ii) une turbine à flux transversal comprenant l'aube de turbine fixée à un support pour tourner sensiblement autour d'un axe longitudinal de l'aube de turbine par le mouvement de l'eau sur les surfaces d'aube de turbine, ou (iii) une turbine marémotrice.

13. Un procédé pour la fabrication d'un longeron pour une aube de turbine entraînée par l'eau, le procédé comprenant les étapes de :
a. poser une pluralité de couches (190, 194) de matériau composite de résine renforcé par des fibres pour former un stratifié sensiblement plane de celui-ci ;
b. durcir la résine pour former une feuille durcie à partir du stratifié ;
c. couper la feuille pour former des bords opposés qui définissent une partie d'une partie de montage pour le montage du longeron à un élément de turbine et une partie d'au moins une partie de support d'aube allongée ; et
d. assembler un empilement sensiblement plane des feuilles coupées pour former un longeron, les bords opposés des feuilles étant disposés pour former des bords opposés de l'empilement, les bords de l'empilement définissant la partie de montage pour le montage du longeron à un élément de turbine et la au moins une partie de support d'aube allongée, les feuilles s'étendant dans une direction longitudinale de la partie de support d'aube allongée.

14. Un procédé selon la revendication 13, dans lequel (i) la au moins une partie de support d'aube allongée comprend des fibres unidirectionnelles sensiblement alignées le long d'un axe longitudinal de la partie de support d'aube allongée, optionnellement dans lequel la partie de montage comprend des fibres inclinées par rapport à l'axe longitudinal ou (ii) dans lequel la au moins une partie de support d'aube allongée comprend des fibres unidirectionnelles alignées à un angle qui ne dépasse par +/- 20 degrés par rapport à un axe longitudinal de la partie de support d'aube allongée, optionnellement dans lequel la partie de montage comprend des fibres inclinées par rapport à l'axe longitudinal.

15. Un procédé selon l'une quelconque des revendications de 13 à 14, dans lequel la partie de montage est formée à partir d'une pluralité de premières couches (190) et la partie de support d'aube est formée à partir d'une pluralité de secondes couches (194), les premières et secondes couches (190, 194) étant interconnectées à des bords adjacents,
optionnellement (i) dans lequel les premières couches (190) et les secondes couches (194) sont interconnectées par un joint d'about en quinconce aux bords adjacents, et/ou
(ii) dans lequel les étapes (a) et (b) sont effectuées pour produire deux feuilles simultanément, chacune des deux parties de parties de montage espacées étant formée à partir d'un stratifié respectif de premières couches (190) et chacune des deux parties de parties de support d'aube étant formée à partir d'un stratifié commun de secondes couches (194), le stratifié des secondes couches (194) étant situé entre, et interconnecté à des bords adjacents à un stratifié respectif des premières couches, et/ou
(iii) dans lequel les premières et secondes couches (190, 194) chacune ont une forme différente respective et des dimensions correspondant sensiblement de manière respective à la forme et aux dimensions de la partie de montage et la partie de support d'aube formée à partir de celle-ci, et/ou
(iv) dans lequel au moins certaines des couches (190, 194) possèdent des fibres unidirectionnelles et au moins certaines des couches possèdent des fibres multiaxiales, optionnellement biaxiales, et/ou
(v) dans lequel au moins une des couches (190, 194) comprend un premier matériau fibreux à la partie de montage et un second matériau fibreux à la partie de support d'aube.
